## Europäisches Patentamt

(19) **European Patent Office**

**Office européen des brevets**

(11) Veröffentlichungsnummer: **0 093 423**
**B1**

(12) **EUROPÄISCHE PATENTSCHRIFT**

(45) Veröffentlichungstag der Patentschrift:
**04.06.86**

(51) Int. Cl.⁴: **B 32 B 27/32,** B 32 B 7/02

(21) Anmeldenummer: **83104206.4**

(22) Anmeldetag: **29.04.83**

(54) **Auf Trägerfolie kaschierte Verbundfolie.**

(30) Priorität: **30.04.82 DE 3216097**

(43) Veröffentlichungstag der Anmeldung:
**09.11.83 Patentblatt 83/45**

(45) Bekanntmachung des Hinweises auf die Patenterteilung:
**04.06.86 Patentblatt 86/23**

(84) Benannte Vertragsstaaten:
**AT BE CH DE FR GB IT LI NL SE**

(56) Entgegenhaltungen:
**EP - A - 0 008 934**
**DE - A - 2 031 036**
**DE - A - 2 038 834**

(73) Patentinhaber: **Feldmühle Aktiengesellschaft,**
**Fritz-Vomfelde-Platz 4, D-4000 Düsseldorf 11 (DE)**

(72) Erfinder: **Engelsberger, Herbert, Heimbachstrasse 13,**
**D-4060 Viersen 1 (DE)**

(74) Vertreter: **Uhlmann, Hans, Dr. rer.nat., Dipl.-Chem.,**
**Gladbacher Strasse 189, D-4060 Viersen 1 (DE)**

## Beschreibung

Die vorliegende Erfindung betrifft mehrlagige Folien, die aus einer ein- oder mehrlagigen Trägerfolie und einer mit der Trägerfolie durch Kaschieren verbundenen Verbundfolie aus Polyolefinen oder Olefincopolymeren besteht, wobei die Lagen der Verbundfolie aus Polyolefinen bzw. Olefincopolymeren unterschiedlicher mechanischer Schockfestigkeit hergestellt sind.

Mehrlagige Folien sind bekannt und werden z.B. bei der Lebensmittelverpackung in grossem Ausmass eingesetzt. Diese Folien bestehen aus einer Trägerfolie und einer weiteren damit kaschierten ein- oder mehrlagigen Folie. Üblicherweise ist die Trägerfolie hitzefest, biaxial gereckt und ggf. lackiert. Sie ist vorzugsweise aus Zellglas, Polyester, Polyamid, Polypropylen oder Aluminium hergestellt, bzw. besteht sie aus mehreren Einzelfolien der genannten Materialien. Bei der fertigen Verpackung bildet die Trägerfolie die Aussenlage und muss deshalb gut bedruckbar sein.

Die auf die Trägerfolie kaschierte Folie bildet bei der fertigen Verpackung die Innenseite, deshalb muss diese Folie – im Fall einer Verbundfolie zumindest die Lage, aus der die spätere Innenseite der Verpackung besteht – gut verschweissbar sein und aus Gründen der guten Verarbeitbarkeit einen geringen Reibungskoeffizienten aufweisen, um eine gute Verarbeitbarkeit auf den Verpackungsmaschinen zu gewährleisten.

Für verschiedene Anwendungsbereiche hat sich dieser Folienaufbau jedoch als noch nicht zufriedenstellend erwiesen, insbesondere, weil die Durchstossfestigkeit, vor allem bei Vakuumverpackungen, noch nicht ausreichend ist und es infolgedessen zu erheblichen Störungen, wie Undichtigkeiten kommt, was bei vielen Lebensmitteln zum Verderb der Ware führt. Es könnte als naheliegend angesehen werden, die geringe Durchstossfestigkeit durch eine erhöhte Foliendicke auszugleichen, dies ist jedoch nicht möglich, weil viele Verpackungsmaschinen lediglich Folien mit einer bestimmten Maximaldicke verarbeiten können. Diese Maximaldicke liegt im Fall von Kaffeeverpackungsmaschinen bei nicht mehr als 110 µm.

Es wurden deshalb bereits mehrlagige Folien aus Trägerfolien und darauf kaschierten koextrudierten Polyäthylenverbundfolien hergestellt. Die verwendeten koextrudierten Polyäthylenverbundfolien bestehen häufig aus zwei Lagen, von denen üblicherweise die eine aus dem Copolymeren eines Polyäthylens hoher mechanischer Schockfestigkeit, d.h. grosser Zähigkeit und die andere aus einem normalen Polyäthylen (Homopolyäthylen, LDPE, low density Polyäthylen) besteht. Alternativ wurde dabei die Lage aus einem Polyäthylen hoher mechanischer Schockfestigkeit, vorzugsweise aber die LDPE-Lage mit der Trägerfolie kaschiert. Obwohl die Durchstossfestigkeit durch dieses System gesteigert werden konnte, weisen auch diese mehrlagigen Folien noch Mängel auf, so dass sie noch nicht in allen Bereichen zufriedenstellend eingesetzt werden können. Nachteilig bei einer solchen mehrlagigen Folie ist eine zu geringe Planlage bei erhöhten Verarbeitungstemperaturen, so dass häufig Störungen, insbesondere bei mit hoher Geschwindigkeit arbeitenden Verpackungsmaschinen, auftreten. Ursache dafür sind vor allem unterschiedliche Wärmeausdehnungskoeffizienten der beiden Lagen der Verbundfolie und unterschiedliche Foliendicken der beiden Lagen der Verbundfolie, so dass diese quasi wie ein Bi-Metall wirkt und dadurch zur Rollneigung der Folienbahn führt. Dies tritt besonders stark bei einer mehrlagigen Verbundfolie auf, bei der die Lage aus einem Polyäthylen hoher mechanischer Schockfestigkeit zwischen Träger und LDPE-Lage liegt. Wird dagegen die Lage aus Polyäthylen hoher mechanischer Schockfestigkeit als untere Lage verwendet, wobei die LDPE-Lage auf die Trägerfolie kaschiert ist, wird die Rollneigung der mehrlagigen Folienbahn zwar reduziert, es kommt aber infolge der meist stumpfen Oberfläche der Lage aus Polyäthylen hoher mechanischer Schockfestigkeit zu Verarbeitungsschwierigkeiten. Die Zugabe von Gleitmitteln zu dem Polyäthylen, aus dem diese Lage hergestellt ist, ist nur in gewissem Rahmen möglich, weil diese Mittel in die anderen Lagen wandern und die Kaschierfestigkeit reduzieren.

Ein weiterer Nachteil der bekannten mehrlagigen Folie ist ihr nicht ausreichendes «Dead-Fold-Verhalten», worunter die Fähigkeit der Folie verstanden wird, so stehen zu bleiben, wie sie gefaltet wurde und nicht oder nur wenig zurückzufedern. Das Dead-Fold-Verhalten ist z.B. bei Kaffee-Vakuum-Verpackungen von Bedeutung, wo es darauf ankommt, dass eine z.B. kastenförmig vorgefaltete Folie nach dem Abschieben von einem üblicherweise zur Faltung benutzten Faltdorn ohne zurückzufedern ihre Kastenform beibehält und dadurch eine saubere Abfüllung des Füllgutes ermöglicht.

Die vorliegende Erfindung sieht ihre Aufgabe darin, eine mehrlagige aus einem Träger und einer auf diesen Träger kaschierten Verbundfolie zu schaffen, die alle diese Nachteile überwindet und insbesondere über eine hohe Durchstossfestigkeit verfügt, dabei eine gute Planlage auch bei erhöhten Temperaturen aufweist, ein ausgezeichnetes Dead-Fold-Verhalten hat und die, falls erforderlich, auf ihrer der Trägerfolie entgegengesetzten Seite ein gutes Gleitvermögen gegenüber Metall aufweist.

Zur Lösung dieser Aufgabe sieht die Erfindung eine mehrlagige Folie vor, die aus einer ein- oder mehrlagigen Trägerfolie und einer durch Kaschieren damit verbundenen, geblasenen koextrudierten Verbundfolie besteht, die Lagen aus Polyolefinen oder Olefincopolymeren unterschiedlicher mechanischer Schockfestigkeit aufweist, von denen mindestens eins eine mechanische Schockfestigkeit > 100 cN gemessen nach ASTM D 1709–62 hat und wobei die mehrlagige Folie durch die folgenden Merkmale gekennzeichnet ist:

a) Die koextrudierte Verbundfolie weist zwei in Material und Dicke übereinstimmende Aussenlagen (A, A') und zwei in Material und Dicke übereinstimmende Innenlagen (B, B') auf,

b) die Innenlagen (B, B') sind durch Verblokkung, die Aussenlagen (A, A') mit den Innenlagen (B, B') durch Schmelzverbindung verbunden.

Vorzugsweise besteht die geblasene koextrudierte Verbundfolie aus zwei Lagen; für verschiedene Anwendungsbereiche kann es aber auch zweckmässig sein, drei- bis fünflagige Schläuche zu verwenden und diese zu einer sechs- bzw. zehn-lagigen Folie zu verbinden. Auf diese Weise können weitere Lagen, z.B. aus Polyvinylalkohol, mit zusätzlicher Funktion (Gassperre) verwendet werden. Die Aussenlagen werden mit den Innenlagen während der Extrusion oberflächig verschmolzen. Die Innenlagen werden unter Anwendung von Wärme und Druck mittels eines Quetschwalzenpaares miteinander verblockt. Der fertig verblockte, mehrlagige Schlauch wird zweckmässig auf einer Seite in bekannter Weise elektrisch vorbehandelt und in ebenfalls bekannter Weise auf eine ein- oder mehrlagige Trägerfolie kaschiert.

Die entscheidende Bedeutung der erfindungsgemässen mehrlagigen Folie liegt im symmetrischen Aufbau der mit der Trägerfolie kaschierten und zu einem mindestens vierlagigen Schlauch verblockten koextrudierten Verbundfolie. Der symmetrische Aufbau bewirkt gegenüber den bisher verwendeten zweilagigen Verbundfolien mit asymmetrischem Aufbau eine wesentlich verbesserte Planlage, auch bei höheren Temperaturdifferenzen während der Verarbeitung. Der eingangs beschriebene Bi-Metalleffekt tritt nicht auf, weil durch den symmetrischen Aufbau die Kräfte, die zur Rollneigung der Folie zur einen oder anderen Seite führen, gegenseitig aufgehoben werden.

Die Verwendung der erfindungsgemäss aus einer Trägerfolie und einer koextrudierten und verblockten Verbundfolie mit Aussenlagen A, A' und Innenlagen B, B' bestehenden mehrlagigen Folie hat gegenüber vorbekannten Folienaufbauten, die beispielsweise aus Trägerfolie mit Einschichtenpolyäthylenfolie bestehen, den Vorteil, dass bei gleicher Dicke der Verbundfolien eine wesentlich höhere Durchstossfestigkeit erhalten wird, bzw. bei gleicher Durchstossfestigkeit die Gesamtdicke der Verbundfolie wesentlich geringer gehalten werden kann, wodurch eine erhebliche Materialersparnis erzielt wird und grosse Vorteile auf den Verarbeitungsmaschinen erzielt werden.

Die höheren Durchstossfestigkeiten erklären sich zunächst einmal dadurch, dass die Innenlagen B, B' durch Verblockung und nicht durch eine Schmelzverbindung miteinander verbunden sind und ferner dadurch, dass zumindest eine der Lagen der geblasenen, koextrudierten Verbundfolie, bzw. zumindest zwei Lagen des verblockten Schlauches, aus einem Polyolefin oder Olefincopolymeren einer mechanischen Schockfestigkeit > 100 cN bestehen. Desweiteren wird die Durchstossfestigkeit dadurch verbessert, dass zwischen den Lagen A, B und A', B' infolge der Blaskopfrotation ein gewisser Ausgleich der Festigkeiten in Maschinen- und Querrichtung geschaffen wird.

Für die Zwecke der Erfindung kommt es darauf an, für die Innenlagen B, B' der Verbundfolie ein unter Druck und Wärme möglichst gut verblokkendes Polyäthylen oder Äthylencopolymer hoher mechanischer Schockfestigkeit auszuwählen.

Unter Blocken wird im Sinne der vorliegenden Erfindung eine Verbindung zwischen den Lagen B, B' verstanden, die eine mechanische Lösbarkeit dieser beiden Lagen ermöglicht. Vorzugsweise ist die durch das Verblocken der Lagen B, B' erzielte Verbundhaftung nicht grösser als 100 cN/cm.

Für die Aussenlagen A, A' werden dagegen gut verschweissbare Rohstoffe ausgewählt, die gegenüber Metall einen geringen Reibungskoeffizienten aufweisen.

Zur Herstellung von tiefziehfähigen koextrudierten Verbundfolien versteht es sich, dass die erfindungsgemässe Verbundfolie in unverstrecktem Zustand belassen wird.

Im Rahmen der Erfindung hat es sich als zweckmässig erwiesen, eine koextrudierte Verbundfolie zu verwenden, bei der entweder die Innenlagen B, B' aus einem Polyäthylen oder Äthylencopolymeren oder die Aussenlagen A, A' aus einem Polyolefin oder Olefincopolymeren hergestellt sind, dessen mechanische Schockfestigkeit mindestens 25 cN, vorzugsweise mindestens 50 cN höher ist als das der anderen Lagen der koextrudierten Verbundfolie. Als bevorzugt geeignet zur Herstellung der Lagen der koextrudierten Verbundfolie haben sich Äthylen-Vinylacetatcopolymere (EVA) mit bis zu 35 Gew.-% Vinylacetatanteil erwiesen. Als ganz besonders geeignet sind Copolymere mit 3 bis 10 Gew.-% Vinylacetat und einem Schmelzindex von 0,2 bis 4,0, vorzugsweise von 0,5 bis 1,5 anzusehen. Diese Copolymere können sowohl als Aussenlagen A, A' als auch als Innenlagen B, B' verwendet werden. Je nachdem, ob diese Äthylen-Vinylacetatcopolymeren als Aussen- oder als Innenlagen verwendet werden, können sie Gleitmittel oder Antiblockmittel enthalten. Bevorzugt ist die Anwendung der Lagen aus Äthylen-Vinylacetatcopolymeren als Innenlagen B, B', weil diese Kunststofftype sich gut verblocken lässt, und andererseits durch ihre Weichheit und schlechten Reibungswerte gegenüber Metall sowie infolge eines gewissen Essiggeruchs, der mit steigendem Vinylacetatgehalt zunimmt, weniger gut für die Herstellung der Aussenschichten A, A' geeignet ist. Jedoch ist die Anwendung auch als Aussenlage A, A' möglich, wenn die o.g. Nachteile nicht von entscheidender Bedeutung sind und es andererseits auf eine ausgezeichnete Verschweissbarkeit ankommt.

Für die Herstellung von hitzebelastbaren Vakuum-Tiefziehverpackungen haben sich Innenlagen aus Vinylacetatcopolymeren mit einem Vinylacetat-Gehalt von 20 bis 28 Gew.-% als besonders vorteilhaft erwiesen, weil wegen des extrem weichen Charakters dieser Innenlagen das Auftreten von Lufteinschlüssen in der Verblockungsebene nahezu ausgeschlossen ist und dadurch beim Erhitzen keine Startpunkte für eine Luftbläschenbildung gegeben sind, die zu einer partiellen Delamination führen.

Besonders geeignet für die Aussenlagen ist LLDPE (linear-low-density-Polyäthylen) mit einer Dichte von 0,918 bis 0,945, bevorzugt von 0,922 bis 0,930. Der Schmelzindex dieses Polyäthylens liegt bei 0,2 bis 4,0. Bevorzugt wird ein LLDPE mit einem Schmelzindex von 0,8 bis 1,5.

Diese Polyäthylengruppe kann mit und ohne Gleitmittel verwendet werden, und ggf. als Antiblockmittel Silikat enthalten. Die mechanische Schockfestigkeit von LLDPE erreicht Spitzenwerte von 175 cN, weshalb ein solches LLDPE hervorragend für die Zwecke der Erfindung geeignet ist.

Für die Herstellung von temperaturbelastbaren Folien, insbesondere für Vakuum-Tiefziehpakkungen haben sich Aussenlagen aus High-Density-Polyäthylen (HDPE, Niederdruckpolyäthylen) und Polypropylen, ganz besonders bevorzugt aus einer ungereckten Lage aus einem Propylencopolymeren (PPUG) mit einem 1 bis 4 Mol-%, besonders bevorzugt 2 bis 3 Mol-%, betragenden Zusatz an Äthylen erwiesen. Diese Aussenlagen sind insbesondere in Kombination mit 20 bis 28 Gew.-% Vinylacetat enthaltenden Innenlagen aus Äthylen-Vinylacetat geeignet.

Als ganz besonders bevorzugt hat sich ein mit den Ionen des Natriums oder Zink vernetztes Äthylen-Methacrylsäurecopolymeres erwiesen, das auch unter der Bezeichnung Ionomerharz bekannt ist und unter dem Handelsnamen Surlyn von der Firma Dupont hergestellt wird. Da die mechanische Schockfestigkeit von mit Natrium vernetztem Ionomerharz bis zu 450 cN beträgt, wird dieser Rohstoff bevorzugt zur Herstellung der Innenlagen B, B' verwendet. Neben der hervorragenden mechanischen Schockfestigkeit zeichnet sich dieser Rohstoff durch sehr gute Verblockungseigenschaften, Ölresistenz und gute Extrudierbarkeit aus.

In der vorliegenden Anmeldung beruhen alle Angaben der mechanischen Schockfestigkeit auf der Messung nach ASTM D-1709–62 bei einer Fallhöhe von 650 mm und einer Foliendicke von 25 μm.

Für die Zwecke der Erfindung hat es sich als vorteilhaft erwiesen, die Innenlagen B, B' aus Polyäthylenen bzw. Äthylencopolymeren höherer mechanischer Schockfestigkeit zu bilden als die Aussenlagen A, A'. Die Erfindung ist jedoch auf diese Anordnung nicht beschränkt.

Für die Aussenschicht und als Polyäthylen mit einer weniger hohen mechanischen Schockfestigkeit kommt bevorzugt LDPE in Betracht. Es ist leicht zugänglich, hat hervorragende Maschinenlaufeigenschaften, gute Verschweisseigenschaften und ist in einer grossen Typenbreite am Markt, so dass die für den Verschweissvorgang wichtige Aussenschicht der koextrudierten Verbundfolie, aus der bei der fertigen Verpackung die Innenschicht gebildet wird, leicht den geeigneten Verpackungsmaschinen angepasst werden kann. Gewöhnlich wird LDPE mit einer Dichte von 0,918 bis 0,934, bevorzugt von 0,922 bis 0,928 und einem Schmelzindex von 0,2 bis 4,0, bevorzugt von 0,7 bis 2,0 angewendet.

Aus den vorgenannten Rohstoffen lassen sich die nachfolgenden ganz besonders bevorzugten Varianten zur Herstellung einer erfindungsgemässen mehrlagigen Folie ableiten, ohne dass die Erfindung auf diese Varianten beschränkt ist:

1. Die Aussenlagen A, A' bestehen aus LDPE, dem Antiblock- und Gleitadditive in üblicher Menge zugesetzt sind. Die Innenlagen B, B' bestehen aus einem Äthylen-Vinylacetatcopolymeren. Eine solche mehrlagige Folie eignet sich besonders gut für die Vakuumverpackung von Kaffee, verfügt über hervorragende Oberflächeneigenschaften und gutes Dead-Fold-Verhalten und erhält durch die aus Äthylen-Vinylacetatcopolymeren hergestellten Innenschichten eine hervorragende Durchstossfestigkeit.

2. Die Aussenlagen A, A' bestehen aus LLDPE, die Innenlagen B, B' bestehen aus einem Äthylen-Vinylacetatcopolymeren. Diese Variante hat eine noch höhere Durchstossfestigkeit und ist ausserdem tiefzugfähig.

3. Die Aussenlagen A, A' bestehen aus einem Äthylen-Vinylacetatcopolymeren, die Innenlagen B, B' bestehen aus einem mit Natriumionen vernetzten Äthylenmethacrylsäurecopolymeren. Durch diesen Aufbau erhält die erfindungsgemässe mehrlagige Folie eine hervorragende Durchstossfestigkeit, und eine besonders ausgeprägte Tiefziehfähigkeit. Bevorzugt wird diese Folie zum Verpacken von Fleisch, Käse und Nüssen verwendet.

4. Die Aussenlagen A, A' bestehen aus HDPE oder einem Copolymeren des Polypropylens mit 2 bis 3 Mol-% Anteil Äthylen, die Innenlagen bestehen aus einem Äthylen-Vinylacetatcopolymeren mit 20 bis 30 Gew.-% Vinylacetatanteil. Bevorzugt wird diese Folie zum Verpacken von Fertiggerichten oder sogenannter Hundewurst verwendet, d.h. Verpackungsgütern, die hoch erhitzt werden müssen, um eine schnelle Verderblichkeit auszuschliessen.

Als Trägerfolie können mit einem Kleber aufzubringende ungereckte oder biaxial gereckte Folien auf Basis Polyamid, Polyester, Polypropylen und Zellglas, die ggf. zusätzlich mit Aluminiumfolie kaschiert sind, verwendet werden.

Für nicht tiefgezogene Verpackungen, wie z.B. für die Vakuumverpackung von Kaffee, liegt die Dicke der bekannten mehrlagigen Folie insgesamt bei ca. 100 μm. Auf die Trägerfolie, die ggf. aus zwei Lagen besteht, entfallen dabei ca. 15 bis 25 μm. Da die üblichen Dicken von nicht tiefgezogenen Kaschierfolien bei 25 bis 100 μm, meist bei 50 bis 75 μm liegen und es nicht möglich ist, die einzelnen Lagen der koextrudierten Verbundfolie mit durchschnittlichen Dicken < 10 μm herzustellen, ergibt sich für die Verwendung der erfindungsgemässen mehrlagigen Folie im o.g. Anwendungsbereich, dass die koextrudierte Verbundfolie bzw. der verblockte Schlauch bevorzugt aus vier Lagen besteht.

Bevorzugt beträgt die Dicke der Lagen A, A' 1/2 bis 4/5 der Gesamtdicke der koextrudierten Verbundfolie bzw. des verblockten Schlauches, während die Gesamtdicke der Lagen B, B' 1/5 der Gesamtdicke nicht unter- bzw. 1/2 der Gesamtdicke nicht überschreitet. Die auf diese Weise hergestellten verblockten Schläuche liegen bei einer Gesamtdicke von mindestens 40 µm bis max. 500 µm, wobei der bevorzugte Dickenbereich bei 70 bis 100 µm für nicht tiefgezogene Folien liegt, während Tiefziehfolien auch höhere Dicken aufweisen und der bevorzugte Bereich zwischen 80 und 250 µm liegt.

Die erfindungsgemässen mehrlagigen Folien können in weiten Bereichen der Verpackungsindustrie eingesetzt werden, jedoch haben sie sich als ganz besonders für den Bereich der durchstossgefährdeten Vakuumverpackungen als geeignet erwiesen, und zwar für:

tiefgezogene Vakuumverpackungen, insbesondere für Fleischwaren, Käse und Nüsse solche mit einer Trägerfolie aus ungerecktem Polyamid, sowie einer koextrudierten Verbundfolie mit Aussenlagen A, A' aus Äthylen-Vinylacetatcopolymeren und Innenlagen B, B' aus mit Metallionen vernetztem Äthylenmethacrylsäurecopolymeren,

nicht tiefgezogene Vakuumverpackungen, insbesondere für Kaffee und ähnliche sauerstoffempfindliche Produkte solche mit einer Trägerfolie aus mit Aluminium kaschierter Polyesterfolie, metallisierter oder PVDC lackierter gereckter Polyesterfolie oder Polyamidfolie sowie einer koextrudierten Verbundfolie mit Aussenlagen A, A' aus einem Äthylen-Vinylacetatcopolymeren und Innenlagen B, B' aus mit Natriumionen vernetztem Äthylen-Methacrylsäurecopolymeren oder Aussenlagen A, A' aus LLDPE und Innenlagen B, B' aus Äthylen-Vinylacetatcopolymeren.

Zur weiteren Erklärung wird die Erfindung anhand der Figuren 1 bis 3 näher erläutert, ohne dass die Erfindung auf die in den Figuren gezeigten Ausführungsformen beschränkt ist.

Fig. 1 zeigt in schematischer Darstellung einen im Querschnitt dargestellten zweilagigen koextrudierten Blasschlauch.

Fig. 2 zeigt im Querschnitt den gleichen Schlauch, jedoch im verblockten Zustand.

Fig. 3 zeigt in schematischer Form eine erfindungsgemässe mehrlagige Verbundfolie, bei der der in Fig. 2 gezeigte Schlauch auf eine einlagige Trägerfolie aus Polyamid aufkaschiert ist.

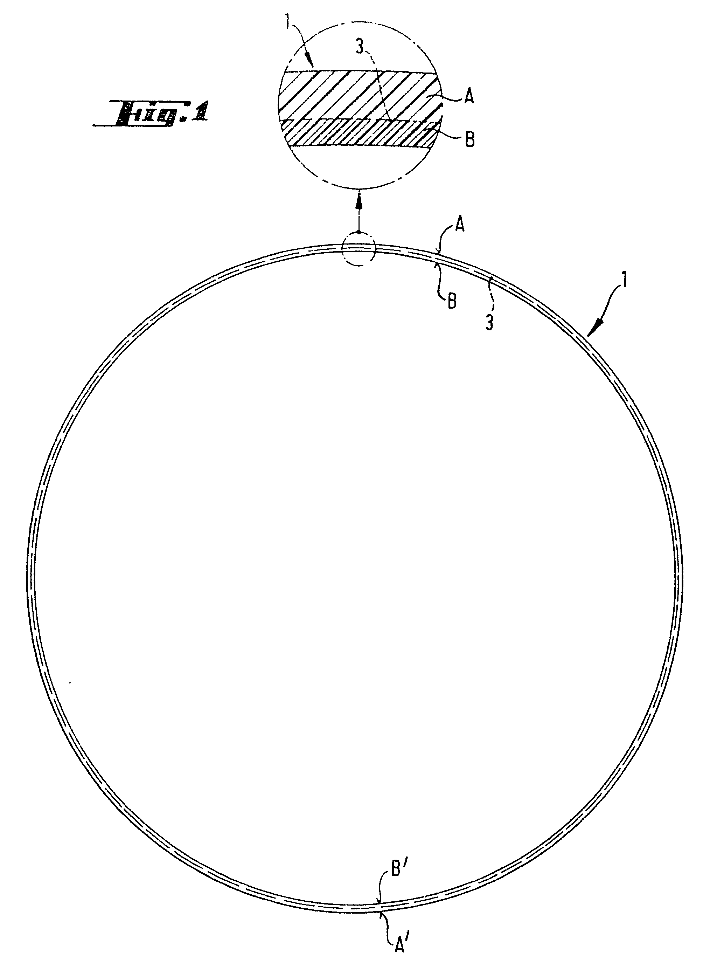

In Fig. 1 sind mit A und B die äusseren bzw. inneren Lagen des koextrudierten Blasschlauches 1 bezeichnet.

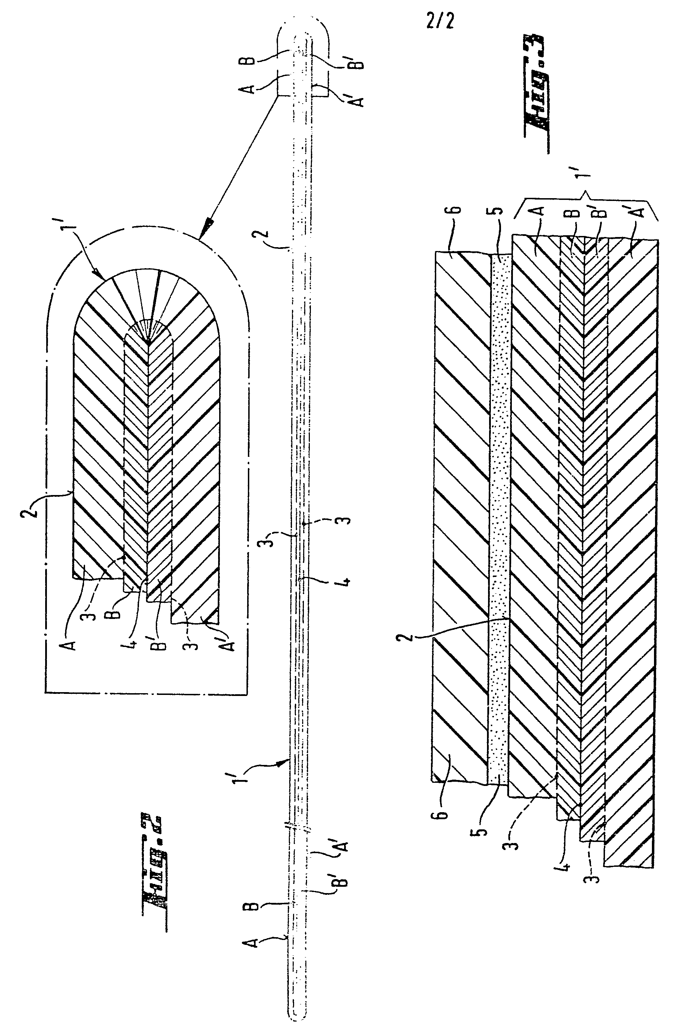

Fig. 2 zeigt die durch Verblocken des Blasschlauches 1 hergestellte Verbundfolie 1'. Lagen A, A' sind bei 3 durch Schmelzverbindungen mit Lagen B, B' verbunden. Entlang der Linie 4 sind die inneren Lagen B, B' miteinander verblockt. 2 kennzeichnet die Seite, an der eine elektrische Vorbehandlung vor der Kaschierung vorgenommen wurde. In Fig. 3 ist mit 6 eine Trägerfolie aus Polyamid bezeichnet, die mit einem Kleber 5 auf die verblockte Verbundfolie 1' kaschiert ist.

Die nachfolgenden Beispiele dienen der weiteren Erklärung der Erfindung, ohne die Erfindung auf diese Ausführungsbeispiele zu beschränken.

Beispiel 1

Zur Herstellung von mehrlagigen Vakuumtiefziehfolien werden zweilagige koextrudierte Blasschläuche in verschiedener Dicke hergestellt und die geblasenen Schläuche anschliessend verblockt. Die äusseren Lagen A, A' dieser vierlagigen Verbundfolie bestehen aus einem Äthylencopolymeren mit 4,2 Gew.-% Vinylacetatanteil, einer mechanischen Schockfestigkeit von 145 cN und einem Schmelzindex von 0,8. Die beiden inneren Lagen B, B' bestehen aus einem mit Natriumionen vernetzten Äthylen-Methacrylsäurecopolymeren, das eine mechanische Schockfestigkeit von 450 cN und einen Schmelzindex von 1,4 aufweist. Die Gesamtdicke der beiden äusseren Lagen A, A' beträgt 2/3, die Gesamtstärke der beiden inneren Lagen B, B' 1/3 der Gesamtdicke des verblockten Schlauches. In einer Versuchsreihe wurden Verbundfolien mit dem oben beschriebenen Aufbau mit Gesamtdicken von 80, 100, 120, 140, 160, 180, 200, 220 und 240 µm hergestellt.

Die Verbundfolien wurden mit Trägerfolien aus ungerecktem Polyamid 6 kaschiert, wobei die Dicke der Trägerfolie die halbe Dicke der Verbundfolie aufwies.

In einem Vergleichsversuch wurde eine der oben beschriebenen erfindungsgemässen mehrlagigen Folien mit einer Gesamtdicke von 240 µm mit einer bekannten Tiefziehfolie, die eine Gesamtdicke von 300 µm aufwies und die aus einer 100 µm dicken ungereckten Polyamidfolie und einer damit durch Verblocken verbundenen zweilagigen Verbundfolie aus Äthylencopolymeren mit 8 Gew.-% Anteil Vinylacetat, deren einzelne Lagen jeweils 100 µm dick waren, in einem Abpackversuch, bei dem gebogene Fleischwürste verpackt wurden, verglichen. Trotz der Dickenreduzierung von 60 µm und trotz des geringeren Vinylacetatanteils zeigte die erfindungsgemässe mehrlagige Folie ein besseres Tiefziehverhalten (insbesondere eine sauber ausgezogene Mulde) und geringere Durchstossleckagen als die bisherige Folie.

In einem weiteren Vergleichsversuch wurde eine der in Beispiel 1 beschriebenen erfindungsgemässen mehrlagigen Folien mit einer Gesamtdicke von 360 µm mit einer konventionellen mehrlagigen Folie, deren einzelne Lagen aus Polyamid/LDPE/LDPE/Polyamid/LDPE bestanden und die eine Gesamtdicke von 365 µm aufwies, verglichen. Diese mehrlagige Folie besteht aus zwei Polyamid/Polyäthylen-Verbundfolien, die durch Schmelzextrusion mit Polyäthylen zu einer Fünfschichtfolie vereinigt sind. Solche Folien werden zum Verpacken von unter der Bezeichnung «Pfefferblock» bekannten Dauerwürsten verwendet. Es wurde ein gleich gutes Produktionsergebnis trotz geringfügig reduzierter Gesamtdicke erzielt, wobei der eigentliche Vorteil aber darin liegt, dass die erfindungsgemässe Folie einen wesentlich geringeren Produktionsaufwand, nämlich nur einem Kaschiervorgang anstelle von drei bei der bisherigen Folie erfordert.

**Beispiel 2**

Zur Herstellung einer mehrlagigen Folie für die Vakuumverpackung werden unter Verwendung einer metallisierten Polyesterfolie von 12 μm als Trägermaterial drei verschiedene zweilagige Schläuche durch Blasextrusion hergestellt, die entstandenen Schläuche verblockt und mit der Trägerfolie kaschiert.

I: Die beiden äusseren Lagen A, A' der verblockten Verbundfolie bestehen aus LDPE mit einer mechanischen Schockfestigkeit von 86 cN, einem Schmelzindex von 2,0, die beiden inneren Lagen B, B' aus Äthylen-Vinylacetatcopolymeren mit 5 Gew.-% Vinylacetatanteil, einer mechanischen Schockfestigkeit von 150 cN und einem Schmelzindex von 2,0.

II. Die beiden äusseren Lagen bestehen aus LLDPE mit einer mechanischen Schockfestigkeit von 175 cN, einem Schmelzindex von 1,0, die beiden inneren Lagen entsprechen den unter I beschriebenen.

III. Die beiden äusseren Lagen A, A' bestehen aus Äthylencopolymeren mit 3 Gew.-% Vinylacetatanteil, einer mechanischen Schockfestigkeit von 150 cN und einem Schmelzindex von 2,0. Die beiden inneren Lagen B, B' bestehen aus einem mit Natriumionen vernetzten Äthylen-Methacrylsäurecopolymeren mit einer mechanischen Schockfestigkeit von 450 cN und einem Schmelzindex von 1,4.

Die Gesamtdicke der Verbundfolie betrug in allen drei Varianten 85 μm, wobei auf die Aussenlagen A und A' 2/3 und auf die Innenlagen B, B' 1/3 der Dicken entfallen, so dass sich eine Gesamtdicke einschliesslich Kleber und Trägerfolie von 100 μm ergab.

Als Vergleichsmaterial wurde eine metallisierte Polyesterfolie als Trägerfolie mit einer 45 μm dicken Polyäthylenfolie (LDPE) kaschiert, so dass diese Folie einschliesslich Kleber eine Gesamtdicke von 100 μm aufwies.

Bei Abpackversuchen, bei denen auf einer Dornradmaschine Kaffeepackungen von 250 g vakuumverpackt wurden, ergaben die erfindungsgemässen Folien eine wesentlich geringere Leckagenrate.

**Beispiel 3**

In einem weiteren Versuch, bei dem Kaffeepackungen von 250 und 500 g auf einer Schlauchbeutelmaschine vakuumverpackt wurden, wurden die nachfolgend beschriebenen Folien vergleichend eingesetzt.

Zur Herstellung einer erfindungsgemässen mehrlagigen Folie wurde eine mit einer 12 μm starken Alufolie kaschierte biaxial gereckte Polyamidfolie von 15 μm verwendet und auf eine zu einem Schlauch verblockte koextrudierte vierlagige Verbundfolie kaschiert, deren Aussenlagen A, A' aus LDPE mit mechanischen Schockfestigkeit von 86 cN und einem Schmelzindex von 0,8 und deren Innenlagen B, B' aus einem Äthylen-Vinylacetatcopolymeren bestanden, dessen Vinylacetatanteil 5 Gew.-% betrug und das eine mechanische Schockfestigkeit von 150 cN und einen Schmelzindex von 2,0 aufwies. Die Dicke der beiden Aussenlagen A, A' betrug zusammen 50 μm, die der Innenlagen B, B' zusammen 25 μm. Die fertig kaschierte mehrlagige Folie wies eine Gesamtdicke von 105 μm auf.

Zum Vergleich wurde eine konventionelle Folie aus dem gleichen Trägermaterial wie oben beschrieben hergestellt, und mit einer 75 μm dicken Folie aus LDPE mit einer mechanischen Schockfestigkeit von 86 cN und einem Schmelzindex von 0,8 kaschiert, so dass ebenfalls eine Gesamtdicke einschliesslich Kleber von 105 μm resultierte.

Bei einem Abpackversuch, bei dem Kaffee vakuumverpackt wurde, wurde bei der erfindungsgemässen Folie eine um 40% geringere Leckagenrate erzielt.

**Patentansprüche**

1. Mehrlagige Folie, bestehend aus einer ein- oder mehrlagigen Trägerfolie und einer durch Kaschieren damit verbundenen, geblasenen koextrudierten Verbundfolie, deren Lagen aus Polyolefinen oder Olefincopolymeren unterschiedlicher mechanischer Schockfestigkeit hergestellt sind, von denen mindestens ein Polyolefin oder Polyolefincopolymer eine mechanische Schockfestigkeit > 100 cN gemessen nach ASTM D 1709–62 aufweist, gekennzeichnet durch die folgenden Merkmale:

a) Die koextrudierte Verbundfolie (1') weist zwei in Material und Dicke übereinstimmende Aussenlagen (A, A') und zwei in Material und Dicke übereinstimmende Innenlagen (B, B') auf,

b) die Innenlagen (B, B') sind durch Verblokkung, die Aussenlagen (A, A') mit den Innenlagen (B, B') durch Schmelzverbindung verbunden.

2. Mehrlagige Folie nach Anspruch 1, dadurch gekennzeichnet, dass entweder die Aussenlagen (A, A') aus einem Polyolefin oder Olefincopolymeren oder die Innenlagen (B, B') der koextrudierten Verbundfolie aus einem Polyäthylen oder Polyäthylencopolymeren hergestellt sind, dessen mechanische Schockfestigkeit mindestens 25 cN höher ist als das der anderen Lagen der koextrudierten Verbundfolie (1').

3. Mehrlagige Folie nach Anspruch 1, dadurch gekennzeichnet, dass entweder die Aussenlagen (A, A') aus einem Polyolefin oder Olefincopolymeren oder die Innenlagen (B, B') der koextrudierten Verbundfolie aus einem Polyäthylen oder Polyäthylencopolymeren hergestellt sind, dessen mechanische Schockfestigkeit mindestens 50 cN höher ist als das der anderen Lagen der koextrudierten Verbundfolie (1').

4. Mehrlagige Folie nach einem der Ansprüche 1 und 2, dadurch gekennzeichnet, dass die Aussenlagen (A, A') oder die Innenlagen (B, B') der koextrudierten Verbundfolie (1') aus einem Äthylen-Vinylacetatcopolymeren bestehen.

5. Mehrlagige Folie nach Anspruch 1, dadurch gekennzeichnet, dass die Aussenlagen (A, A') der koextrudierten Verbundfolie (1') aus LDPE, HDPE, LLDPE oder PPUG bestehen.

6. Mehrlagige Folie nach einem der Ansprüche 1 bis 4, dadurch gekennzeichnet, dass die Innenlagen (B, B') der koextrudierten Verbundfolie (1') aus einem mit Metallionen vernetzten Äthylen-Methacrylsäurecopolymeren bestehen.

7. Mehrlagige Folie nach einem der Ansprüche 1 bis 6, dadurch gekennzeichnet, dass die Innenlagen (B, B') der koextrudierten Verbundfolie (1') aus einem Polyäthylen oder Äthylencopolymeren höherer mechanischer Schockfestigkeit hergestellt sind als die Aussenlagen.

8. Mehrlagige Folie nach einem der Ansprüche 1 bis 7, dadurch gekennzeichnet, dass das Polyäthylen oder Äthylencopolymere, aus dem die Innenlagen (B, B') der koextrudierten Verbundfolie (1') hergestellt sind, eine mechanische Schockfestigkeit von 120 bis 460 cN und das Polyolefin oder Olefincopolymere, aus dem die Aussenlagen (A, A') hergestellt sind, eine mechanische Schockfestigkeit von 60 bis 175 cN aufweist.

9. Mehrlagige Folie nach einem der Ansprüche 1 bis 8, dadurch gekennzeichnet, dass bei einer mehrlagigen Folie für die Vakuumverpackung die koextrudierte Verbundfolie (1') aus vier Lagen mit einer Gesamtdicke von 60 bis 100 µm besteht, wobei auf die Aussenlagen A, A' eine Dicke von nicht mehr als 4/5 und nicht weniger als 1/2 und auf die Innenlagen B, B' eine Dicke von nicht mehr als 1/2 und nicht weniger als 1/5 entfällt.

10. Mehrlagige Folie nach einem der Ansprüche 1 bis 8, dadurch gekennzeichnet, dass bei einer mehrlagigen Tiefziehfolie die koextrudierte Verbundfolie (1') aus vier Lagen mit einer Gesamtdicke von 60 bis 400 µm besteht, wobei auf die Aussenlagen A, A' eine Dicke von nicht mehr als 4/5 und nicht weniger als 1/2 und auf die Innenlagen B, B' eine Dicke von nicht mehr als 1/2 und nicht weniger als 1/5 entfällt.

## Revendications

1. Feuille multicouche constituée par une feuille support à une ou plusieurs couches et par une feuille composite reliée à celle-ci par doublage, soufflée et coextrudée dont les couches sont réalisées en polyoléfines ou copolymères d'oléfine de différente résistance mécanique aux chocs et dont au moins une polyoléfine ou copolymère de polyoléfine présente une résistance mécanique aux chocs > 100 cN mesurée suivant ASTM D 1709–62, caractérisée par les caractéristiques suivantes:

a) la feuille composite coextrudée (1') comporte deux couches externes (A, A') coïncidant en matériau et en épaisseur et deux couches internes (B, B') coïncidant en matériau et en épaisseur,

b) les couches internes (B, B') sont raccordées par adhérence par contact, les couches externes (A, A') sont raccordées aux couches internes (B, B') par fusion.

2. Feuille multicouche selon la revendication 1, caractérisée par le fait que, soit les couches externes (A, A') sont réalisées en une polyoléfine ou copolymère d'oléfine, soit les couches internes (B, B') de la feuille composite coextrudée sont réalisées en un polyéthylène ou copolymère de polyéthylène, dont la résistance mécanique aux chocs est d'au moins 25 cN supérieure à celle des autres couches de la feuille composite coextrudée (1').

3. Feuille multicouche selon la revendication 1, caractérisée par le fait que, soit les couches externes (A, A') sont réalisées en une polyoléfine ou copolymère d'oléfine, soit les couches internes (B, B') de la feuille composite coextrudée sont réalisées en un polyéthylène ou copolymère de polyéthylène, dont la résistance mécanique aux chocs est d'au moins 50 cN supérieure à celle des autres couches de la feuille composite coextrudée (1').

4. Feuille multicouche selon l'une des revendications 1 et 2, caractérisée par le fait que les couches externes (A, A') ou les couches internes (B, B') de la feuille composite coextrudée (1') sont réalisées en un copolymère d'éthylène et d'acétate de vinyle.

5. Feuille multicouche selon la revendication 1, caractérisée par le fait que les couches externes (A, A') de la feuille composite coextrudée (1') sont réalisées en LDPE, HDPE, LLDPE ou PPUG.

6. Feuille multicouche selon l'une des revendications 1 à 4, caractérisée par le fait que les couches internes (B, B') de la feuille composite coextrudée (1') sont réalisées en un copolymère d'éthylène et d'acide méthacrylique réticulé avec des ions métalliques.

7. Feuille multicouche selon l'une des revendications 1 à 6, caractérisée par le fait que les couches internes (B, B') de la feuille composite coextrudée (1') sont fabriquées en un polyéthylène ou copolymères d'éthylène de résistance mécanique aux chocs plus élevée que les couches externes.

8. Feuille multicouche selon l'une des revendications 1 à 7, caractérisée par le fait que le polyéthylène ou les copolymères d'éthylène dont sont fabriquées les couches internes (B, B') de la feuille composite coextrudée (1') présentent une résistance mécanique aux chocs de 120 à 460 cN et que la polyoléfine ou les copolymères d'oléfine dont sont fabriquées les couches externes (A, A') présentent une résistance mécanique aux chocs de 60 à 175 cN.

9. Feuille multicouche selon l'une des revendications 1 à 8, caractérisée par le fait que dans une feuille multicouche pour l'emballage sous vide, la feuille composite coextrudée (1') est composée de quatre couches d'une épaisseur totale de 60 à 100 µm, dont une épaisseur de pas plus de 4/5 et pas moins de 1/2 pour les couches externes A, A' et une épaisseur de pas plus de 1/2 et pas moins de 1/5 pour les couches internes B, B'.

10. Feuille multicouche selon l'une des revendications 1 à 8, caractérisée par le fait que dans une feuille multicouche pour emboutissage profond, la feuille composite coextrudée (1') se compose de quatre couches d'une épaisseur totale de 60 à 400 µm dont une épaisseur de pas plus de 4/5 et pas moins de 1/2 pour les couches externes A, A' et une épaisseur de pas plus de 1/2 et pas moins de 1/5 pour les couches internes B, B'.

## Claims

1. Multi-layer film comprising a single- or multi-layer support film and, laminated thereto, a blown co-extruded compound film the layers of which are manufactured from polyolefins or olefin copolymers of different impact resistance, of which at least one polyolefin or polyolefin copolymer has an impact resistance of $>$ 100 cN measured according to ASTM D 1709–62, characterised by the following features:

a) the co-extruded compound film (1') has two external layers (A, A') that correspond with regard to material and thickness and two internal layers (B, B') that correspond with regard to material and thickness,

b) the internal layers (B, B') are connected by blocking and the external layers (A, A') are connected to the internal layers (B, B') by melt-bonding.

2. Multi-layer film according to claim 1 characterised in that either the external layers (A, A') are manufactured from a polyolefin or olefin copolymer or the internal layers (B, B') of the co-extruded compound film are manufactured from a polyethylene or polyethylene copolymer, the impact resistance of which is at least 25 cN higher than that of the other layers of the co-extruded compound film (1').

3. Multi-layer film according to claim 1, characterised in that either the external layers (A, A') are manufactured from a polyolefin or olefin copolymer or the internal layers (B, B') of the co-extruded compound film are manufactured from a polyethylene or polyethylene copolymer, the impact resistance of which is at least 50 cN higher than that of the other layers of the co-extruded compound film (1').

4. Multi-layer film according to one of claims 1 and 2, characterised in that the external layers (A, A') or the internal layers (B, B') of the co-extruded compound film (1') comprise an ethylene/vinyl acetate copolymer.

5. Multi-layer film according to claim 1, characterised in that the external layers (A, A') of the co-extruded compound film (1') comprise LDPE, HDPE, LLDPE or PPUG.

6. Multi-layer film according to one of claims 1 to 4, characterised in that the internal layers (B, B') of the co-extruded compound film (1') comprise an ethylene/methacrylic acid copolymer cross-linked with metal ions.

7. Multi-layer film according to one of claims 1 to 6, characterised in that the internal layers (B, B') of the co-extruded compound film (1') are manufactured from a polyethylene or ethylene copolymer having a higher impact resistance than the external layers.

8. Multi-layer film according to one of claims 1 to 7, characterised in that the polyethylene or ethylene copolymer from which the internal layers (B, B') of the co-extruded compound film are manufactured has an impact resistance of from 120 to 460 cN and the polyolefin or olefin copolymer from which the external layers (A, A') are manufactured has an impact resistance of from 60 to 175 cN.

9. Multi-layer film according to one of claims 1 to 8, characterised in that in the case of a multi-layer film for vacuum packaging the co-extruded compound film (1') comprises four layers having a total thickness of from 60 to 100 μm, the external layers A, A' having a thickness of not more than 4/5 and not less than 1/2 and the internal layers B, B' having a thickness of not more than 1/2 and not less than 1/5.

10. Multi-layer film according to one of claims 1 to 8, characterised in that in the case of a multi-layer deep-drawn film the co-extruded compound film (1') comprises four layers having a total thickness of from 60 to 400 μm, the external layers A, A' having a thickness of not more than 4/5 and not less than 1/2 and the internal layers B, B' having a thickness of not more than 1/2 and not less than 1/5.

**Fig.1**

FIG.2

FIG.3